# EUROPEAN PATENT APPLICATION

(11) **EP 2 690 752 A1**
(43) Date of publication of application: **29.01.2014**
(21) Application number: 11861935.2
(22) Date of filing: 25.03.2011
(51) Int. Cl.: H02K 1/18, H02K 15/02

(54) **STATOR CORE MANUFACTURING METHOD**

(71) Applicant: TOYOTA JIDOSHA KABUSHIKI KAISHA, Toyota-shi, Aichi-ken, 471-8571 (JP)
(72) Inventor: TANAHASHI Fumiki, Toyota-shi Aichi 471-8571 (JP)
(74) Representative: Albutt, Anthony John
(86) International application number: PCT/JP2011/057429
(87) International publication number: WO 2012/131850

(57) **Abstract**

The present invention addresses the problem of providing a method for manufacturing a stator having a yoke section having a cut section with small distortion. This stator core manufacturing method, which forms a cut section on a stator core, provided with a teeth section and a yoke section formed with a single cut section, formed by layering core steel plates, is characterized by having: an inner diameter hole forming process where a teeth section and an inner diameter hole are formed on the inner diameter of the core steel plate prior to the steel plate being formed; a pilot hole forming process where a pilot hole is formed, in one spot along the outer perimeter of the area of the core steel plate being punched out, on the steel plate prior to being formed; a cut section forming process where a cut section is formed from the inner diameter hole to the pilot hole; and a core steel plate punching out process where the core steel plate is punched out from the steel plate prior to being formed.

## Description

### TECHNICAL FIELD

The present invention relates to a stator core manufacturing method for forming a stator core made of core steel plates which are progressively formed in a progressive press process so that each of the steel plates has a yoke part and teeth parts, and laminated or stacked one on another.

### BACKGROUND ART

Some stator cores are configured such that coils are mounted or fitted on teeth parts of the stator core. The circularity of the stator core (stator-core circularity) and the parallelism of end faces (end-face parallelism) of the stator core are determined depending on press accuracy. Therefore, a one-piece stator core made of steel plates which can be produced by a single press work can easily enhance the stator-core circularity and the end-face parallelism as compared with a split stator core produced by assembling split core pieces individually.

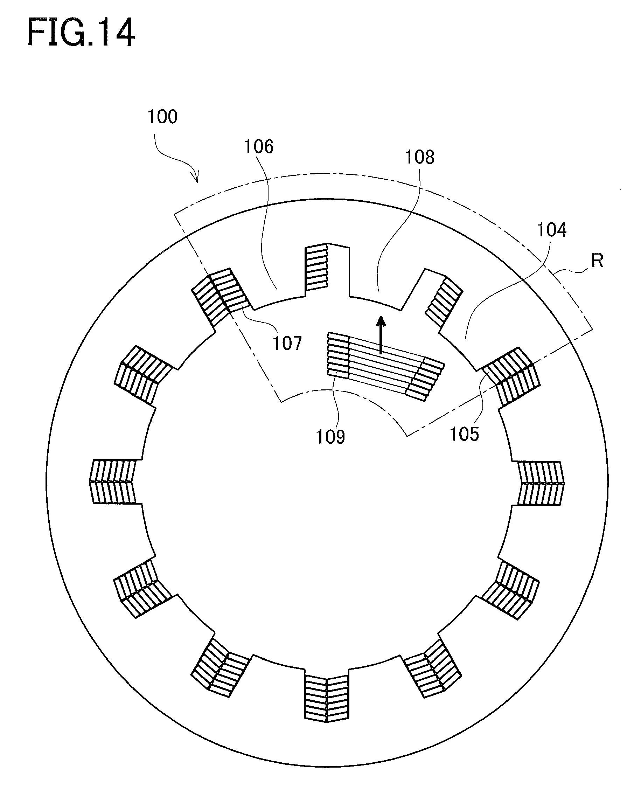

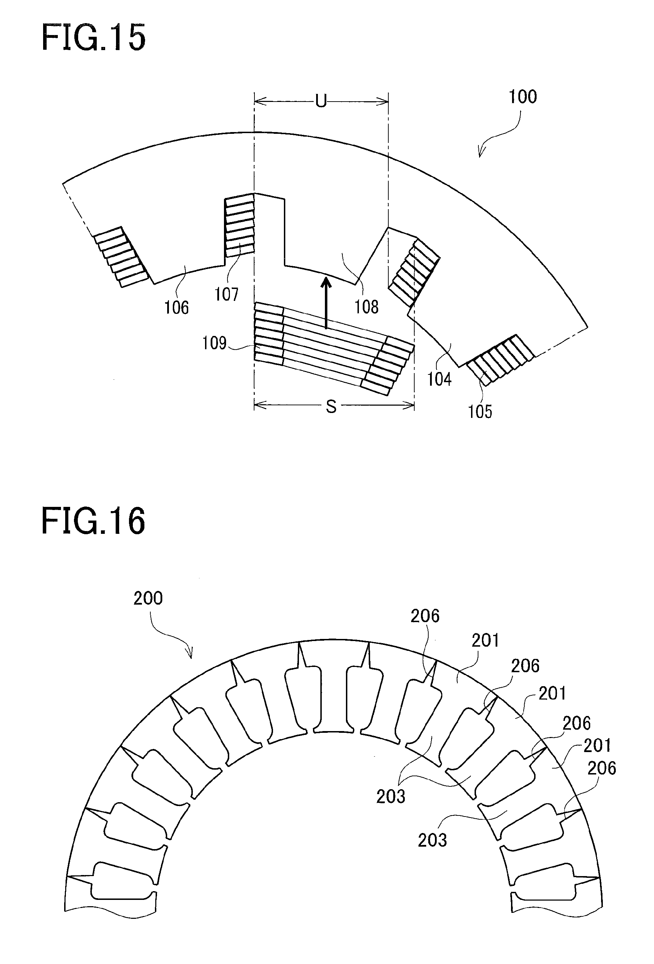

The one-piece stator core is manufactured for example by mounting edgewise coils on teeth parts in sequence. However, for a stator core 100, as shown in FIG 14, when a last coil 109 is to be mounted on a teeth part 108, the last coil 109 interferes with a firstly mounted coil 105 and a coil 107 which are to be adjacent to the coil 109. Specifically, as illustrated in FIG 15 showing an enlarged view of a part indicated by a chain line R in FIG 14, the mounting width S of the coil 109 is wider than the mountable width U between the adjacent coils 105 and 107. Thus, the last coil 109 could not be mounted on the teeth part 108.

Therefore, in the case where the coils are mounted on the teeth parts in sequence, the last coil 109 could not be mounted on the teeth part 108.

As this type of technique, conventionally, there is a stator core 200 described in Patent Document 1 shown in FIG 16. As shown in FIG 16, stator parts 201 of the stator core 200 are formed, on an inner peripheral side, with teeth parts 203. Slits 206 are formed on both sides of each stator part 201. When bundled coil wires are to be mounted on the teeth parts 203 of the stator parts 201, the outer periphery of each stator part 201 is pressed or pushed. This causes deformation of each stator part 201 allowed by the slits 206 formed on both sides of each stator part 201. When one stator part 201 is externally pushed, thereby widening the slits 206, the corresponding teeth part 203 is made to protrude inward. Since each teeth part 203 is caused to protrude inward, the bundled coil wires are allowed to be mounted thereon.

As above, the stator parts 201 are externally pushed one by one in sequence and the bundled coil wires are allowed to be mounted on the teeth parts 203. In addition, Patent Documents 2 and 3 also disclose the inventions related to mounting of teeth parts on coils.

### RELATED ART DOCUMENTS

### PATENT DOCUMENTS

Patent Document 1: JP 2000-245081 A
Patent Document 2: JP 2001-251819 A
Patent Document 3: JP 2006-352991 A
Patent Document 4: JP 2000-243624 A
Patent Document 5: JP 2009-118676 A
Patent Document 6: JP 2006-352991 A
Patent Document 7: JP 2004-023964 A
Patent Document 8: JP 2002-238231 A
Patent Document 9: JP 2000-184630 A

### SUMMARY OF INVENTION

### PROBLEMS TO BE SOLVED BY THE INVENTION

However, the conventional arts have the following problems. Specifically, the stator core 200 has a problem that the stator parts 201 have to be pushed one by one for each teeth part 203 to mount the bundled coil wires on the teeth parts 203. Therefore, in a case of the teeth parts 203 provided at twelve places in the whole circumference, the outer periphery of the stator parts 201 have to be pushed twelve times so that the coil is mounted on the teeth parts 203. Such twelve-times pushing of the outer periphery of the stator parts 201, increasing the number of steps, results in deteriorated productivity.

In the stator core 200, the slits 206 are formed over the whole circumference of the inner periphery. Due to the slits 206 formed in the whole circumference, the circularity of the stator core 200 and the parallelism of end faces of the stator core 200 are deteriorated. The stator-core circularity represents the circularity of a hollow cylindrical stator core. The end-face parallelism represents the parallelism of an end face forming an inner wall of the hollow part of the hollow cylindrical stator core with respect to a central axis. Based on the stator-core circularity and the end-face parallelism, the stator core and a rotor set in the hollow part of the stator core are controlled in three dimensions to avoid the stator core and the rotor from bumping or colliding with each other.

If the stator-core circularity and the end-face parallelism are low, the rotor has to be reduced in size to prevent bumping or colliding with the stator core. Such a size-reduced rotor generates a wide gap between the stator core and the rotor and thus a magnetic flux density between the stator core and the rotor lowers. This results in a decrease in motor power.

The circularity and the end-face parallelism of the stator core 200 are deteriorated for the following reasons. When the outer periphery of each stator part 201 is pushed, the stator part 201 is allowed to be deformed by the slits 206. When pushing each stator part 201 is stopped, each stator part 201 returns to an original position by a restoring force. Although each stator part 201 returns to its original shape by the restoring force, the stator parts 201 actually have different restoring forces because of the slits 206 arranged over the whole circumference. Therefore, the circularity and the end-face parallelism of the stator core 200 are deteriorated by the total of differences in restoring force depending on the slits 206.

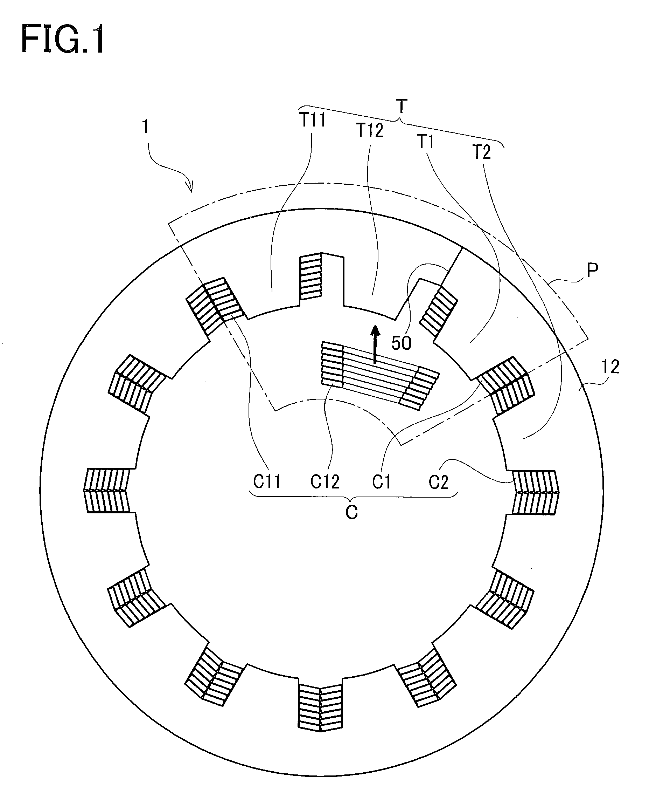

Therefore, the present applicant proposed a stator structure 1 as shown in FIG. 1 in which a stator core made of core steel plates laminated or stacked and formed with a yoke part 12 and teeth parts T, and coils are mounted around the teeth parts T. In this stator structure 1, a cut section 50 is formed at only one place of the yoke part 12. Since the cut section 50 formed at only one place, coils C are allowed to be mounted on the teeth parts T while keeping the circularity and the end-face parallelism.

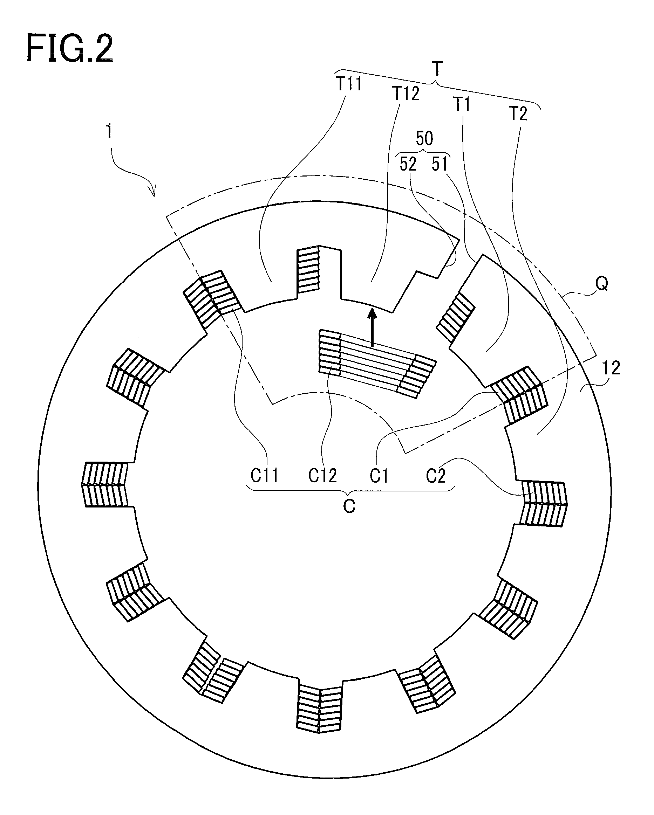

This is because, as shown in FIG 2, the stator structure 1 enables mounting of a coil C12 on a last teeth part T12 by separating the cut section 50. In separating, then the cut section 50 is opened within an elastically deformable range of the stator core. As long as the separation width is within the elastically deformable range of the stator core, the cut section 50 can return to an original state with high circularity and high end-face parallelism by elastic force without becoming plastically deformed.

However, Patent Documents 4 to 9 fail to disclose a manufacturing method including forming a cut section in a yoke part.

In the above stator structure 1 proposed by the present applicant, furthermore, the forming method of the cut section was intended to form the cut section after forming a thin steel plate in a progressive press process and then producing a stator-core steel plate. However, a first problem is that, when the cut section is formed after the progressive press process, a step using a cutting tool such as wire cutting is required after punching, pressing or crimping, and laminating. This results in an increase in cost.

A second problem is that, when the cut section is formed in the progressive press process, the yoke part is distorted. Specifically, the cut section is formed, not by punching out a part of the yoke part, by pressing a punch to make a cut in the yoke part at one place. Accordingly, when the cut section is formed in such a manner that one end of the yoke part having an almost annular shape is fixed by a die and a retainer and the other end is cut by a punch, the other end portion pressed by the punch is pressed and plastically deformed. This causes distortion. Due to such a distortion, the magnetic characteristics of the stator core made up of the laminated stator-core steel plates is deteriorated and hence the performance of a motor as a finished product is degraded.

The present invention has been made to solve the above problems and has a first purpose to provide a stator manufacturing method with reduced cost, and a second purpose to provide a stator manufacturing method for manufacturing a stator having a yoke part including a cut section with reduced distortion.

### MEANS OF SOLVING THE PROBLEMS

To achieve the above purpose, one aspect of the invention provides a stator core manufacturing method configured as below.
(1) In a method for manufacturing a stator core, in which core steel plates each having a yoke part and teeth parts are sequentially formed and the core steel plates are laminated one on another to produce the stator core, the method includes: forming a cut section extending in a radial direction in each of the core steel plates in the progressive press process so that the cut section is located at only one place in a circumferential direction.
(2) In the stator core manufacturing method described in (1), preferably, the stator core is made of the core steel plates stacked by rotary lamination, and a cut position of each cut section to be formed is changed according to an angle of rotary lamination of the core steel plates.
(3) In the stator core manufacturing method described in (1), preferably, the cut position of the cut section is changed by a predetermined amount in the circumferential direction.
(4) In the stator core manufacturing method described in (2) or (3), preferably, a plurality of cutting punches are provided to form the cut sections, and the cutting punches are able to be switched between operation and non-operation.
(5) In the stator core manufacturing method described in (2) or (3), preferably, the cutting punch is moved.
(6) The stator core manufacturing method described in (1) to (5), preferably, further includes: an inner diameter hole forming step of forming the teeth parts and an inner diameter hole in a pre-shaped steel plate and in an inner circumference of each core steel plate; a pilot hole forming step of forming a pilot hole at one place of the pre-shaped steel plate in an outer peripheral portion outside a portion of the pre-shaped steel plate to be punched out as the core steel plate; a cut section forming step of forming the cut section to extend from the inner diameter hole to the pilot hole; and a steel plate punching step of punching out the core steel plate from the pre-shaped steel plate.
(7) In the stator core manufacturing method described in (6), preferably, the pilot hole has a long hole shape.
(8) Another aspect of the invention provides a stator core manufacturing apparatus for manufacturing a stator core made of core steel plates each including a yoke part and teeth parts, the core steel plates being sequentially formed by a progressive press process and laminated one on another, wherein the apparatus includes a cutting punch to form a cut section extending in a radial direction in each of the core steel plates in the progressive press process so that the cut section is located at only one place in a circumferential direction.
(9) In the stator core manufacturing apparatus described in (8), preferably, a cut position of each cut section to be formed is changed according to an angle of rotary lamination of the core steel plates.
(10) In the stator core manufacturing apparatus described in (8), preferably, the cutting punch is moved in the circumferential direction to the cut position.
(11) In the stator core manufacturing apparatus described in (9) or (10), preferably, a plurality of cutting punches are provided, and the cutting punches are able to be switched between operation and non-operation.
(12) The stator core manufacturing apparatus described in (8) to (11) preferably includes: an inner diameter hole forming unit to form the teeth parts and an inner diameter hole in a pre-shaped steel plate and in an inner circumference of each core steel plate; a pilot hole forming unit to form a pilot hole at one place of the pre-shaped steel plate in an outer peripheral portion outside a portion of the pre-shaped steel plate to be punched out as the core steel plate; and a steel plate punching unit to punch out the core steel plate from the pre-shaped steel plate.
(13) In the stator core manufacturing apparatus described in (12), preferably, the pilot hole forming unit is arranged to form the pilot hole having a long hole shape.

### EFFECTS OF THE INVENTION

With the above configuration (1) or (8), the cut section extending in the radial direction can be formed at only one place in the circumferential direction of each of the core steel plates in the progressive press process. Since the cut sections can be formed in the progressive press process, there is no need to provide additional equipment for performing a cutting equipment step. Thus, cost reduction can be achieved.

With the above configuration (2) or (9), the cut positions of the cut sections can be changed according to the rotary lamination angles of the core steel plates. Since the cut positions of the cut sections are changed according to the rotary lamination angles, the cut sections can be provided even when the core steel plates are stacked by rotary lamination.

With the above configuration (3) or (10), the core steel plates can be formed with the cut positions changed by a predetermined amount. Since the core steel plates with the cut positions changed by the predetermined amount are formed, a finished stator core can be provided with an engagement protrusion and an engagement recess. Thus, when the stator core is elastically deformed, displacement of the stator core in the lamination direction can be restrained. Since the displacement in the lamination direction is reduced, the stator core can return to an original shape with high circularity and high end-face parallelism.

With the above configuration (4) or (11), each cut section can be formed promptly. Specifically, the plurality of cutting punches are provided and those cutting punches are switched between operation and non-operation, so that the cut sections can be formed without changing the positions of the core steel plates. This makes it possible to promptly form the core steel plates having the cut sections.

With the above configuration (5), the core steel plates formed with the cut sections can be produced at low cost. Specifically, the cut section is moved so that the cut sections can be formed without changing the positions of the core steel plates. This case where the cutting punch is moved is lowest in cost as compared with the case where a plurality of cutting punches are installed and the case where the positions of the core steel plates are changed. Thus, the core steel plates formed with the cut sections can be produced at low cost.

With the above configuration (6) or (12), it is possible to reduce distortion of each core steel plate generated in forming the cut sections in the core steel plates in the progressive press process. Specifically, the core steel plates can be produced in which one end and the other end of each core steel plate, as both ends of each cut section to be formed in the cut section forming step, are located on the same position. This results from that the pilot hole forming step is provided before the cut section forming step to form the cut section after the pilot hole is formed in the core steel plate. Therefore, reaction force is generated in the core steel plate, thereby allowing the one end and the other end of the core steel plate to be placed at the same level without plastically deforming the core steel plate.

With the above configuration (7) or (13), a necessary area of a steel plate can be made small. Specifically, since the lateral width of the pilot hole can be shortened because of the pilot hole made in a long hole, the area of the steel plate can be reduced.

### BRIEF DESCRIPTION OF THE DRAWINGS

FIG 1 is a diagram showing a step (1) of mounting a coil in a stator core in a first embodiment of the invention;
FIG 2 is a diagram showing a step (2) of mounting the coil in the stator core in the first embodiment of the invention;
FIG 3 is a partial enlarged view of a part enclosed by a chain line P in FIG 1 in the first embodiment of the invention;
FIG 4 is a partial enlarged view of a part enclosed by a chain line Q in FIG 2 in the first embodiment of the invention;
FIG 5 is a diagram showing a step (3) of mounting the coil in the stator core in the first embodiment of the invention;
FIG 6 is a partial enlarged view of a shape (1) of a cut section in a second embodiment of the invention;
FIG 7 is a partial enlarged of a shape (2) of the cut section in the second embodiment of the invention;
FIG 8 is a perspective external view of a stator core in a third embodiment of the invention;
FIG 9 is a partial enlarged view of a part enclosed by a chain line D in FIG 8 in the third embodiment t of the invention;
FIG 10 is a front view of a stator core in a fourth embodiment of the invention;
FIG 11 is a partial enlarged view (1) of a part enclosed by a chain line E in FIG 10 in the fourth embodiment of the invention;
FIG 12 is a partial enlarged view (2) of the part enclosed by the chain line E in FIG 10 in the fourth embodiment of the invention;
FIG 13 is a perspective external view of a coil in the first embodiment of the invention;
FIG 14 is a diagram showing a step of mounting a coil in a stator core in a conventional art;
FIG 15 is a partial enlarged view of a part enclosed by a chain line R in FIG. 14 in the conventional art;
FIG 16 is a partial enlarged view of a stator core in a Patent Document ;
FIG 17 is a conceptual plan view of a forming step (1) of a cut section in examples 1 to 4 of the invention;
FIG 18 is a conceptual plan view of a forming step (2) of the cut section in first to fourth examples of the invention;
FIG 19 is a conceptual plan view of a forming step (3) of the cut section in examples the first to fourth examples of the invention;
FIG 20 is a conceptual plan view of a forming step (4) of the cut section in the first to fourth examples of the invention;
FIG 21 is a conceptual plan view of a forming part for a pilot hole in the forming step (2) of the cut section in the first to fourth examples of the invention;
FIG 22 is a conceptual plan view showing a position of a cutting punch in the forming step (3) of the cut section in the first to fourth examples of the invention;
FIG 23 is a conceptual cross sectional view of a cut section forming machine for forming a cut section in the first to fourth examples of the invention;
FIG 24 is a partial conceptual cross sectional view of a push-out punch for a stator-core steel plate in the forming step (4) of the cut section in the first to fourth examples of the invention; and
FIG 25 is an outer perspective view of a stator core produced by a manufacturing method for the cut section in the first to fourth examples of the invention;

### MODE FOR CARRYING OUT THE INVENTION

### (First Embodiment)

Firstly, a configuration of a stator core (including a configuration of a cut section and a method for forming the cut section) will be explained. Secondly, a configuration of a coil will be explained. Thirdly, a method for mounting the coil onto the stator core will be explained to thereby explain a method for manufacturing a stator.

### <Whole Configuration of Stator>

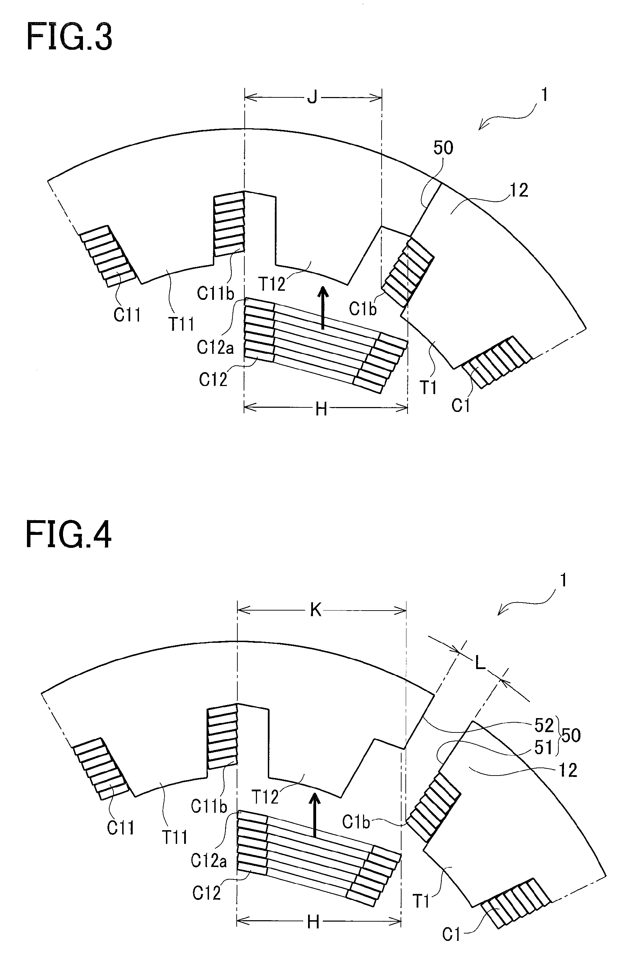

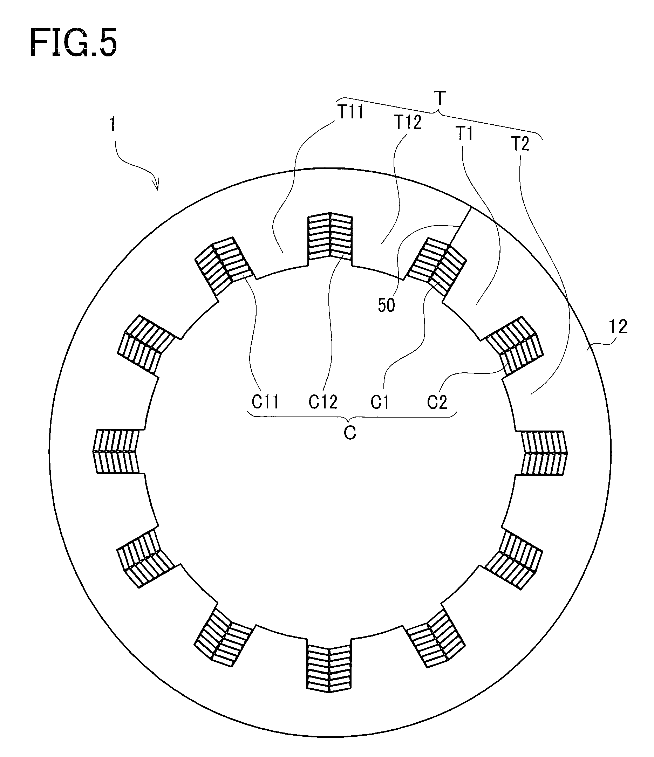

FIG 1 is a diagram showing a step (1) of mounting a coil C in a stator core 1. FIG 2 is a diagram showing a step (2) of mounting the coil C in the stator core 1. FIG 3 is a partial enlarged view of a part enclosed by a chain line P in FIG 1. FIG 4 is a partial enlarged view of a part enclosed by a chain line Q in FIG 2. FIG 5 is a diagram showing a step (3) of mounting the coil C in the stator core 1.

The stator core 1 in FIG 1 is made of a plurality of stator-core thin steel plates 80 ("core steel plates" in claims) laminated or stacked in two or more layers and in a hollow cylindrical shape. The steel plates 80 will be explained later. In the present embodiment, the stator core 1 has a diameter of 200 mm. On the inner peripheral surface of the stator core 1, there are formed twelve teeth parts T at a predetermined pitch. The twelve teeth parts T are referred to as a first teeth part T1, a second teeth part T2, ...., and a twelfth teeth part T12.

The teeth parts T support twelve coils C each of which is formed of a conductor wire having a flat rectangular cross section and wound in more than one turn. In the present embodiment, the coils C include twelve coils C in correspondence with the twelve teeth parts T. The twelve coils C are referred to as a first coil C1, a second coil C2, ...., and a twelfth coil C12.

### (Configuration of Cut Section)

As shown in FIG 1, the stator core 1 is formed with a cut section 50 extending in a radial direction. The cut section 50 is formed through all the thin steel plates. When a pull force is applied to the stator core 1, the stator core 1 is elastically deformed as shown in FIG 2, thus opening the cut section 50. The cut section 50 includes one end 51 formed on a first teeth part T1 side of the yoke part 12 and the other end 52 formed on a twelfth teeth part T2 side of the yoke part 12. Opening of the cut section 50 therefore means that the one end 51 and the other end 52 are separated from each other. While no force is applied to the cut section 50, as shown in FIGs. 1 and 3, the one end 51 and the other end 52 are in contact with each other.

When the stator core 1 is elastically deformed by application of the pull force, the cut section 50 is opened in an elastically deformable range of the core 1, generating a gap L as shown in FIG 4. The width of the gap L is a distance from the one end 51 to the other end 52 of the cut section 50. The width of the gap L in the present embodiment is about 3 mm. Because this about 3-mm width of the gap L corresponds to the elastically deformable range and falls in a range that does not have any influence on circularity and parallelism of end faces (end-face parallelism) after the stator core 1 returns to its original shape by its elasticity (elastic force). Further, when the gap L is generated by a width of about 3 mm, it can provide a distance long enough to insert the last twelfth coil C12 on the last twelfth teeth part T12. In the stator core 1 having a diameter of 200 mm, such a mere about 3-mm width of the gap L hardly influences the circularity and the end-face parallelism.

Although the width of the gap L is set to about 3 mm in the present embodiment, the width of the gap L is not limited to about 3 mm as long as it is in the elastically deformable range and in a region in which the stator core 1 is not plastically deformed. Specifically, the elastically deformable range may be changed according to the materials of the stator core 1 and also according to the size of the stator core 1. Thus, the width of the gap L is not limited to about 3 mm set in the present embodiment.

Furthermore, the width of the gap L has only to be determined as a width allowing the last twelfth coil C12 to be mounted on the last twelfth teeth part T12. According to the cases where the number of teeth parts is increased to 18, 24, etc. or decreased to 9 or 6 as alternatives to the present embodiment including twelve teeth parts, the width of the gap L is changed.

In FIGs. 2 and 4, the width of the gap L to open the cut section 50 is illustrated to be large as a conceptual diagram to facilitate understanding thereof. Actually, the width of the gap L is as small as about 3 mm.

### (Configuration of Coil)

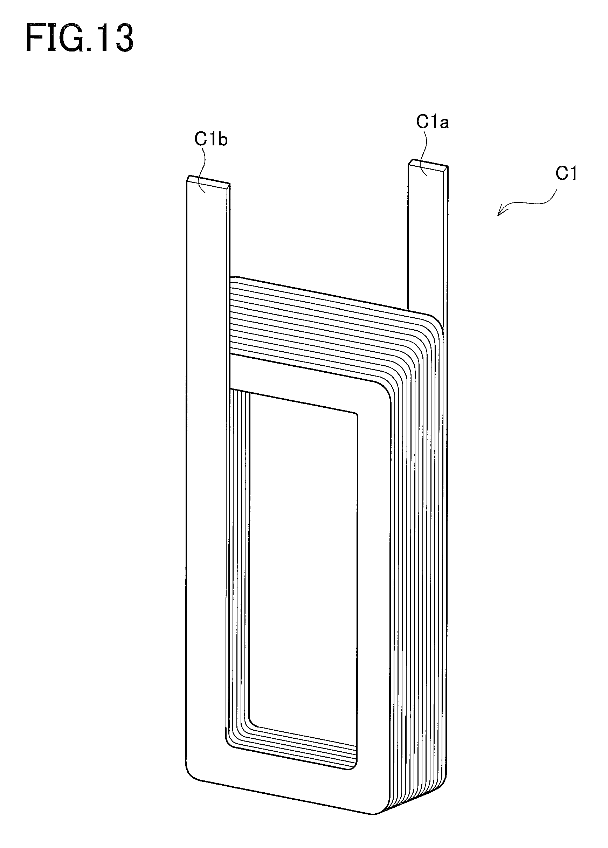

FIG 13 is an external perspective view of the first coil C1. Although FIG 13 describes the first coil C1, the second coil C2 to the twelfth coil C12 are also configured similarly.

As shown in FIG 13, the first coil C1 is a coil made by edgewise bending a flat rectangular conductor wire by use of an edgewise bending wiring device not shown. The first coil C1 has a first end portion C1a and a second end portion C1b. One of the first end portion C1a and the second end portion C1b is a winding starting end and the other is a winding ending end. The first coil C1 is formed of a wire wound in a nearly trapezoidal shape so that short sides are gradually longer as the wire is wound to the first end portion C1a side.

In the present embodiment, an edgewise coil is explained as the finished first coil C1. The same applies to any other types of coils having finished shapes, irrespective of what shape the cross section has, circular or rectangular.

### (Method for Manufacturing Stator-Core Steel Plates)

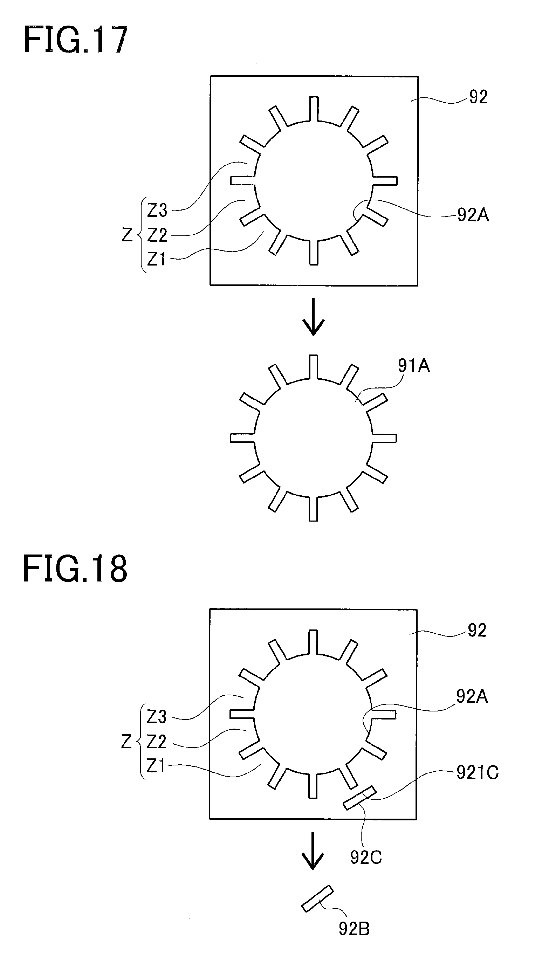

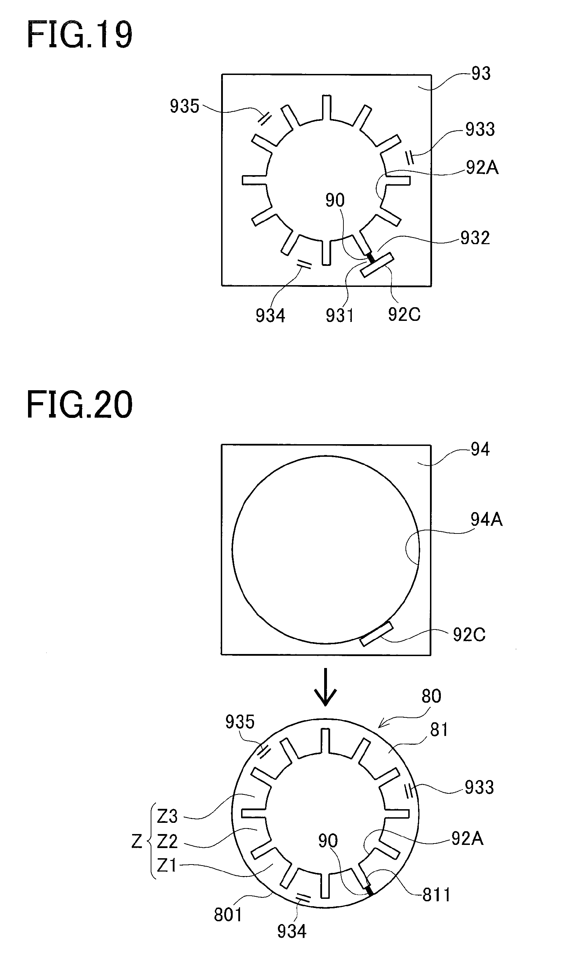

A method for manufacturing stator-core steel plates 80 will be explained below referring to figs. 17 to 20. The stator core is produced in a progressive press process. FIG 17 shows a first step of the manufacturing method of the stator-core steel plates 80. FIG 18 shows a second step, FIG 19 shows a third step, and FIG 20 shows a fourth step.

### (Configuration of Stator Core Steel Plate)

The method for manufacturing the stator-core steel plates 80 is a method to produce stator-core steel plates 80 shown in FIG 20. Each steel plate 80 has a yoke part 81 having a hollow circular shape and teeth parts Z formed on an inner circumferential surface of the yoke part 81. In the present embodiment, the steel plate 80 has a diameter of 200 mm and a thickness of 2 to 3 mm. On the inner circumferential surface of the steel plate 80, twelve teeth parts Z are formed at a predetermined pitch. The twelve teeth parts of the teeth part Z are referred to as a first teeth part Z1, a second teeth part Z2, ...., a twelfth teeth part Z12. The reference signs of a fourth teeth part Z4 to the twelfth teeth part Z12 are omitted in FIG 20.

### (First Step)

A first pre-shaped steel plate 91 not shown is a thin steel plate before being subjected to a first step. In the first step, by a press work, an inner diameter hole piece 91A which defines the teeth parts Z is punched out from the first pre-shaped steel plate 91 and thus a second pre-shaped steel plate 92 is formed. The first step is performed using an inner diameter hole forming device which is a press working device not shown. As shown in FIG 17, the second pre-shaped steel plate 92 from which the inner diameter hole piece 91A has been removed is formed with an inner diameter hole 92A. The teeth parts Z are thus provided along the inner diameter hole 92A.

### (Second Step)

In a second step, as shown in FIG 18, by a press work, a pilot hole piece 92B is punched out from the second pre-shaped steel plate 92 to form a pilot hole 92C. The second step is performed by using a pilot hole forming device which is a press working device not shown. The pilot hole piece 92B is a part located between two teeth parts Z to face the yoke part 81. To be concrete, the pilot hole piece 92B has a long hole shape having long sides and short sides. Further, a long side 921C of the long hole shape, close to the inner diameter hole 92A, is in a position almost parallel to an inner circumferential side 811 between teeth parts Z of the steel plate 80 which is a finished product shown in FIG 20. The long side 921C near the inner diameter hole 92A is located in a portion out of contact with an outer periphery 801 of the steel plate 80 as shown in FIG 20. This is to avoid the shape of the pilot hole 92C from remaining in the outer periphery 801 of the steel plate 80 which is a final shape after the steel plate 80 is subjected to a press work in a fourth step.

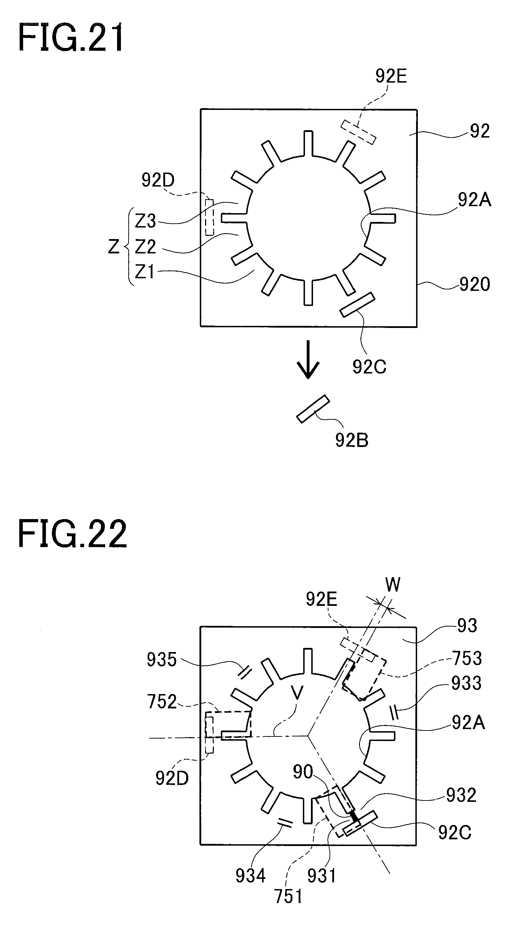

The punching press work of the pilot hole piece 92B in the second step is performed at an interval of 120°. Specifically, as shown in FIG 21, the second pre-shaped steel plate 92 is subjected to a press work to form one of pilot holes 92C, 92D, and 92E which are arranged at 120° intervals. In FIG 21, the pilot hole 92C is formed and thus the pilot holes 92D and 92E are not formed and illustrated with dashed chain lines. The pilot holes 92C, 92D, and 92E are formed at 120° intervals. Forming the pilot hole at 120° intervals is because, when the steel plates 80 are to be laminated to produce a stator core, they are stacked by rotary lamination to enhance cylindricality of the stator core. For this rotary lamination of the steel plates 80 by 120° , the pilot holes formed at intervals of 120°.

The pilot holes 92C, 92D, and 92E are formed by a pilot hole forming device not shown. The pilot holes 92C, 92D, and 92E are formed at intervals of 120°, so that the pilot hole forming device not shown is placed in three positions in front of the second pre-shaped steel plate 92 in correspondence with the pilot holes 92C, 92D, and 92E shown in FIG 21. While the pilot hole forming devices are set in three places and one of them is operated, the remaining pilot hole forming devices are held in non-operation state. Thus, each of the pilot holes 92C, 92C, or 92E can be formed by punching out the pilot hole piece 92B at intervals of 120° without moving the second pre-shaped steel plates 92.

### (Third Step)

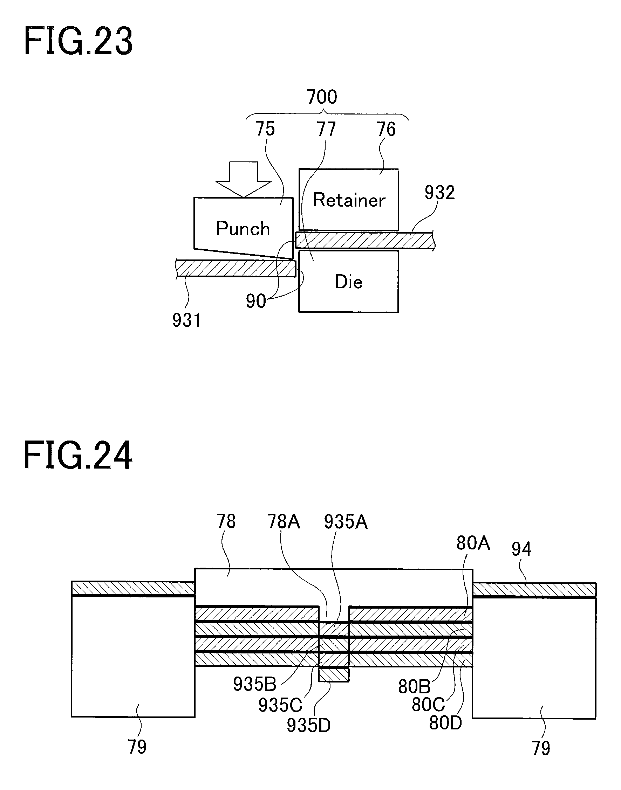

In a third step, as shown in FIG 19, by a press work, a cut section 90 is formed to extend from the inner peripheral side 811 of the inner diameter hole 92A between the steel-plate teeth parts Z of the steel plate 80 to the pilot hole 92C. To be concrete, as shown in FIG 23, one end 932 of the second pre-shaped steel plate 92 to form the cut section 90 is pinched and fixed between a retainer 76 and a die 77. Successively, the other end 931 to form the cut section 90 is pressed by a cutting punch 75. When pressed by the cutting punch 75, the cut section 90 is formed in the second pre-shaped steel plate 92, and a third pre-shaped steel plate 93 shown in FIG 19 is produced. The cutting punch 75, the retainer 76, and the die 77 constitute a cut section forming machine 700.

In the present embodiment, when the cut section 90 is to be formed, a distance between the inner peripheral side 811 of the steel plate between the teeth parts Z of the yoke part and the long side 921 of the pilot hole 92C is short. Thus, when the third pre-shaped steel plate 93 is fixed by the retainer 76 and the die 77 and to be cut by the cutting punch 75, distortion which may be caused in the third pre-shaped steel plate 93 can be reduced. Specifically, since the distance between the inner peripheral side 811 between the teeth parts Z and the long side 921 of the pilot hole 92C is short, the area to be pressed by the cutting punch 75 and thus the distortion of the third pre-shaped steel plate 93 is decreased.

Furthermore, the one end 932 and the other end 931 are made farthest by the press work. In the present embodiment, however, even when the other end 931 is pressed by the cutting punch 75 in cutting work and thus receives a downward load, the other end 931 can return to a position at the same level as the one end 932 by reaction force. In other words, the distance between the inner peripheral side 811 between the teeth parts Z and the long side 921 of the pilot hole 92C to form the cut section 90 is short. However, excepting the distance from the inner peripheral side 811 between the teeth parts Z to the long side 921C of the pilot hole 92C, the distance from the inner peripheral side 811 between the teeth parts Z to an outer periphery 920 of the second pre-shaped steel plate 92 is long. Accordingly, a distance from the inner peripheral side 811 between the teeth parts Z to the outer periphery 920 of the steel plate 92 is long in most part. Having the long distance, even when the most part is applied with a downward load in a cutting work, the most part provide reaction force against the load. Because of the reaction force, the other end 931 can return to the position at the same level as the one end 932. Since the other end 931 returns to the same level position as the one end 932, the stator-core steel plate 80 is not distorted.

If the stator-core steel plate 80 shown in FIG 20 is not formed with the cut section 90 and is subjected to a press work to make the cut section 90, the inner peripheral side 811 between the teeth parts Z and the long side 921C of the pilot hole 92C is short. However, when the cut section 90 is formed in such a steel plate 80 by the press work, distortion may be generated. This is because, when the pilot hole 92C is not formed, the distance between the inner peripheral side 811 between the teeth parts Z and the outer periphery 801 of the steel plate 80 is equal over the entire circumference. Further, the distance between the inner peripheral side 811 between the teeth parts Z and the outer periphery 801 of the steel plate 80 is short over the entire circumference. Accordingly, if the cut section 90 is formed by the cutting punch 75 while no pilot hole 92C is formed, distortion is caused due to the short distance over the entire circumference between the inner peripheral side 811 between the teeth parts Z and the outer periphery 801 of the steel plate 80. Specifically, the one end 932 and the other end 931 are made farthest in the press work, but the other press 931 is pressed and subjected to the downward load in a cutting work. The other end 932 attempts to return by its reaction force, but cannot fully return to an original position because of insufficient reaction force resulting from the short distance between the inner peripheral side 811 between the teeth parts Z and the outer periphery 801 of the steel plate 80 throughout the entire circumference. Thus, distortion is generated.

In the present embodiment, the cut section 90 is formed by a press work using the cut section forming machines 700 to extend from the inner diameter hole 92A to the pilot hole 92C. In FIG 22, only cutting punches 751, 752, and 753 of the cut section forming machines 700 are illustrated. The cutting punches 751, 752, and 753 are arranged in three positions when seen in a front direction of the second pre-shaped steel plate 92 as shown in FIG 22. Specifically, the cutting punches 751, 752, and 753 are placed in the position corresponding to the pilot hole 92C, 92 formed in three places in the second step and at intervals of 120° around the center.

In the present embodiment, furthermore, the cutting punch 753, which is one of the cut section forming machines 700 placed in three positions spaced at intervals of 120°, is placed in a position displaced by a predetermined amount W from one of dashed chain lines V for marking off at intervals of 120° as shown in FIG 22. In Fig. 22, only the cutting punches of the cut section forming machines 700 are illustrated and other components are omitted, but retainers 76 and dies 77 are similarly placed. In the present embodiment, the position of the cutting punch 753 displaced by the predetermined amount W is defined at a position +4 mm from the dashed chain line V marked at the intervals of 120°. The cut section forming machines 700 are disposed in three positions. While one of the cut section forming machines 700 is in operation, the remaining machines 700 are in non-operation. Accordingly, the cut section 90 can be formed in the second pre-shaped steel plate 92 held as is without being moved.

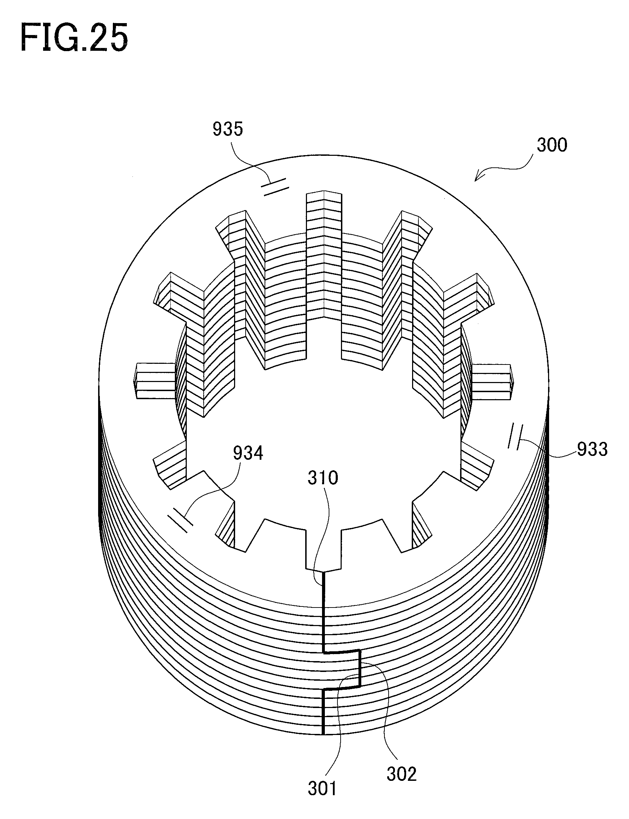

The cutting punch 753 is positioned +4 mm displaced from the dashed chain line V for segmentalization of 120° intervals. Accordingly, when the stator-core steel plates 80 are laminated to produce a stator core 300 as shown in FIG 25, an engagement protrusion 301 and an engagement recess 302 are provided in the stator core 300. Since the engagement protrusion 301 and the engagement recess 302 are formed, if the stator core 300 is elastically deformed to open a cut section 310 by 3 mm, the stator core 300 is prevented from becoming displaced in a lamination direction. This allows the stator core 300 to return to its original shape with high circularity and high end-face parallelism. This is because when the cut section 310 separated by 3 mm fully returns to its original position, the engagement protrusion 301 and the engagement recess 302, each having 4 mm, are not disengaged from each other and thus can serve to guide. With the engagement protrusion 301 and the engagement recess 302 serving as a guide, the cut section 310 can be fully returned to its original position. Thus, the stator core 300 can be returned to its original shape with high circularity and high end-face parallelism without being plastically deformed. The stator core 300 formed with the engagement protrusion 301 and the engagement recess 302 will be further explained in detail in a third embodiment.

As shown in FIG 19, in the third step, the second pre-shaped steel plate 92 is formed with caulking portions 933, 934, and 935 at three positions in the yoke part 81 at intervals of 120° and at a base of the corresponding teeth part Z. When the stator-core steel plates 80 are laminated, accordingly, those caulking portions 933, 934, and 935 allow the steel plates 80 to be fixed in a predetermined position. Since the steel plates 80 are fixed in the predetermined position, the cut sections 90 are positioned in the same places, thus forming the cut section 50 shown in FIG 1. The cut section 50 can be elastically deformed as shown in FIG 2. In the present embodiment, the caulking portions are formed in three positions, but they may be provided at one place, two places, or three or more places as long as they contribute to fix the laminated steel plates 80 in a predetermined position.

### (Fourth Step)

In a fourth step, the stator-core steel plate 80 is punched out from the third pre-shaped steel plate 93 by a press work as shown in FIG 20. The stator-core steel plate 80 is thus produced. The fourth step uses a steel plate punching machine which is a press working device not shown. The long side 921C of the inner diameter hole 92A is located in a portion out of contact with the outer periphery 801 of the stator-core steel plate 80 as shown in FIG 20. Therefore, after the steel plate 80 is subjected to the press work, the shape of the pilot hole 92C is not left in the steel plate 80.

In the fourth step, a push-out punch 78 shown in FIG 24 is used. FIG. 24 is a conceptual diagram of the push-out punch 78. This punch 78 is formed with engagement protrusions 78A configured to engage with the caulking portions 933, 934, and 935. Accordingly, after a stator-core steel plate 80A is punched out of the third pre-shaped steel plate 93, the engagement protrusion 78A is engaged in caulking portions 935B, 935C, and 935D of punched-out steel plates 80B, 80C, and 80D to fix them. For instance, as shown in FIG 24, when the caulking portion 93 5A of the steel plate 80A and the caulking portion 935B of the steel plate 80B are pushed out by the punch 78 when moved downward, simultaneously, the steel plates 80A and 80B are fixed to each other.

As explained above in detail, there is included the first step (an inner diameter hole forming step) of forming the inner diameter hole 92A in the second pre-shaped steel plate 92 to form steel-plate teeth parts Z in the stator-core steel plate 80. The second step (a pilot hole forming step) is provided to form the pilot hole 92C at one place of the second pre-shaped steel plate 92, outside the outer periphery 801 of the part corresponding to the stator-core steel plate 80 which is to be punched out. The third step (a cut section forming step) is provided to form the cut section 90 to extend from the inner diameter hole 92A to the pilot hole 92C. The fourth step (a steel plate punching step) to punch the stator-core steel plate 80 out of the third pre-shaped steel plate 93. Because of the presence of the above four steps, it is possible to reduce distortion which may be generated in the steel-plate yoke part 81. Specifically, the stator-core steel plate 80 produced by the inner diameter hole forming step, the pilot hole forming step, the cut section forming step, and the steel plate punching step can be manufactured with less distortion. To be more concrete, the stator-core steel plate 80 can be manufactured in which the one end 932 and the other end 931 of the steel plate 80, which are both ends of the cut section 90 formed in the cut section forming step, are located at the same level as each other. This is because the pilot hole forming step is performed before the cut section forming step to form the cut section 90 in the stator-core steel plate 80 formed with the pilot hole 92C, thereby causing the reaction force in the steel plate 80, so that the one end 932 and the other end 931 of the steel plate 80 can be located at the same position or level as each other without causing plastic deformation. In the present embodiment, about two hundred stator-core steel plates 80 are laminated to produce the stator 1. Since the one and 931 and the other end 932 of each stator-core steel plate 80 are located at the same level as each other, even when a plurality of stator-core steel plates 80 are laminated, no gap is generated between the steel plates 80. Therefore, when the stator 1 is to be molded, the pressing force to press the stator 1 can be reduced. This can reduce iron loss which is apt to be caused by large pressing force. Because of the steel plates 80 with no gap therebetween, the stator 1 can provide enhanced magnetic characteristics. Thus, the performance of the stator 1 can be increased.

Furthermore, the plurality of cutting punches 751, 752, and 753 are provided to be used in the cut section forming step according to the rotary lamination angle of the stator-core steel plates 80. The cutting punches 751, 752, and 753 are operated or not operated. The position of the cutting punch 753 is displaced by the predetermined amount W in the circumferential direction from the position according to the rotary lamination angle. As shown in FIG. 25, the engagement protrusion 301 and the engagement recess 302 can be easily formed in the cut section 310. Specifically, to form protrusions and recesses in the cut section 310, two kinds of stator-core steel plates 80 having different cut sections are required. According to the present invention, however, the position of the cutting punch 753 is displaced by the predetermined amount W in the circumferential direction from the position corresponding to the rotary lamination angle, so that two kinds of the stator-core steel plates 80 having different cut sections can be easily produced.

Since the cut section 931 can be formed in the progressive press process, there is no need to additionally provide any equipment used for the cutting equipment step. Thus, cost reduction can be achieved.

By changing the cut position of the cut section 931 according to the rotary lamination angle of the stator-core steel plates 80, the cut position of the cut section 931 can be changed according to the rotary lamination angle of the stator-core steel plates 80. By changing the cut position according to the rotary lamination angle, the cut section 931 can be formed in place even when the stator-core steel plates 80 are stacked by rotary lamination.

Since the cut position of the cut section 931 is changed by the predetermined amount in the circumferential direction, the stator-core steel plates 80 can be produced with the cut positions changed by the predetermined amount. Since the steel plates 80 with the cut positions different by the predetermined amount are produced, for example, the engagement protrusion 33 and the engagement recess 34 can be formed in the stator core 3 shown in FIG 3. Accordingly, when the stator core 3 is elastically deformed, the stator core 3 can be prevented from becoming displaced in the lamination direction. This makes it possible to return the stator core 3 to its original shape with high circularity and high end-face parallelism.

Since a plurality of cutting punches 75 to form the cut section 931 are provided. These cutting punches 75 are switchable between operation and non-operation. Thus, the cut section 931 can be formed without changing the position of the stator-core steel plates 80 in the progressive press process. Accordingly, each stator-core steel plate 80 formed with the cut section 931 can be formed promptly.

The stator-core steel plates 80 are stacked in layers by rotary lamination so that the cut positions of the cut sections 931 are changed according to the rotary lamination angle of the stator-core steel plates 80 and the cut positions of the cut sections 931 are changed by the predetermined amount in the circumferential direction. This can change the cut positions of the cut sections 931 according to the rotary lamination angle of the stator core stators 80. Because of the cut positions changed according to the rotary lamination angle, each cut section 931 can be formed in the predetermined position even when the stator-core steel plates 80 are stacked by rotary lamination.

Furthermore, the stator-core steel plates 80 with the cut positions changed by the predetermined amount can be produced. Since the stator-core steel plates 80 with the cut positions changed by the predetermined amount are produced, for example, the engagement protrusion 33 and the engagement recess 34 can be formed in the finished stator core 3 shown in FIG 3. Accordingly, in the case where the stator core 3 is elastically deformed, it is possible to restrain displacement of the stator core 3 in the lamination direction. Restraining the displacement in the lamination direction allows the stator core 3 to return to its original shape with high circularity and high end-face parallelism.

In the present embodiment, a plurality of cutting punches are provided. As an alternative, the cutting punch 75 may be moved. When the cutting punch 75 is moved, the stator-core steel plates 80 formed with the cut sections 931 can be formed at low cost. Specifically, the cut sections 931 can be formed by moving the cut sections 931 without the need to change the position of the stator-core steel plates 80. Moving the cutting punch 75 is lowest in cost as compared with the case where a plurality of cut sections 931 are formed or where the positions of the stator-core steel plates 80 are changed. Consequently, the stator-core steel plates 80 with the cut sections 931 can be produced at low cost.

### <Method of Mounting Coil in Stator Core>

### (First Step)

The stator-core steel plates 80 are laminated or stacked to produce the stator core 1. As shown in FIG 1, the coils C are sequentially mounted on the teeth parts T of the stator core 1. To be concrete, the first coil C1 is mounted on the first teeth part T1 formed in one end of the cut section 50, the second coil C2 is mounted on the second teeth part T2, ...., so that eleven coils C are mounted sequentially on eleven teeth parts T.

After eleven coils C are mounted on eleven teeth parts T as shown in FIGs. 1 and 3, the twelfth coil C12 is not allowed to be mounted on the twelfth teeth part T12 formed in the other end of the cut section 50. Specifically, as shown in FIG 3, a mounting width H which is defined as a mounting width of the twelfth coil C12 on a first end portion C12a side is wider than a mountable width J defined from the second end portion C1b of the first coil C1 to a second end portion C11b of the eleventh coil C11 to receive a coil. Thus, since the first coil C1 and the eleventh coil C11 interfere with the twelfth coil C 12 to be mounted, the twelfth coil C12 is not allowed to be mounted.

### (Second Step)

To mount the twelfth coil C12 on the twelfth teeth part T12, a pull force in a circumferential direction is applied to the cut section 50 of the stator core 1. To be concrete, both end portions of the cut section 50 of the yoke part 12 are grasped from above and below and moved apart from each other in the circumferential direction. The circumferential pull force exerted on the cut section 50 elastically deforms the stator core 1. When the stator core 1 is elastically deformed as shown in FIG 4, the cut section 50 is opened in the elastically deformable range, thereby generating the gap L. The width of the gap L in the present embodiment is a distance of about 3 mm.

When the gap L is generated as shown in FIG 4, the width from the second end portion C1b of the first coil C1 to the second end portion C11b of the eleventh coil C11 is widened from the mountable width J to a mountable width K. The distance determined by subtracting the mountable width J from the mountable width K is proportional to the width of the gap L.

The mountable width K from the second end portion C1b of the first coil C1 to the second end portion C11b of the eleventh coil C11 is larger than the mounting width H of the twelfth coil C12 on the side of the first end portion C12a. Therefore, the twelfth coil C 12 can be mounted on the twelfth teeth part T12 without being interfered by the first coil C1 and the eleventh coil C11.

### (Third Step)

After the twelfth coil C12 is mounted on the twelfth teeth part T12, the circumferential pull force exerted on the cut section 50 is removed. Upon removal of the pull force, the stator core 1 returns by its elasticity to its original state shown in FIG 5. When the stator core 1 returns to the original state shown in FIG 5, the one end 51 and the other end 52 of the cut section 50 are brought in contact with each other, and the gap L disappears. Since the gap L disappears, the first coil C1 and the twelfth coil C12 come close to each other.

The stator core 1 comes to the state shown in FIG 5 by the elasticity and therefore does not cause plastic deformation. Because of no plastic deformation, the stator core 1 can maintain the circularity and the end-face parallelism of the original stator core 1.

### (Opening Cut Section)

The details of opening or separating the cut section 50 in the second and third steps will be explained.

When the pull force in the circumferential direction is applied to the cut section 50 to generate the gap L in the stator core 1, the gap L can be generated without affecting the circularity and the end-face parallelism of the stator core 1. The reason thereof is as below. Since the stator core 1 is applied with the pull force in the elastically deformable range, the stator core 1 will return to its original shape by its elasticity. Therefore, the circularity and the end-face parallelism of the stator core 1 remain unchanged from those obtained before application of the pull force.

When the pull force is to be applied to the stator core 1, in the present embodiment, the pull force is exerted in such a range as not to make the gap wider than about 5 mm. In case the gap is wider than about 5 mm, the stator core 1 is plastically deformed and thus cannot return to its original shape by the elasticity. Accordingly, the pull force in the range causing no plastic deformation is applied to the stator core 1.

With the above configuration, all the coils C can be mounted on the teeth parts T without affecting the circularity and the end-face parallelism of the stator core 1.

As explained in detail above, according to the stator core 1 in the first embodiment, the following advantageous effects can be provided.

Since the cut section 50 is formed only at one place of the yoke part 12, it is possible to mount the coils C on the teeth parts T while maintaining the circularity and the end-face parallelism. The reason thereof is as below. In the conventional stator core 100 shown in FIG 14, the last coil 109 could not be mounted on the last teeth part 108. In contrast, according to the present embodiment, the cut section 50 is opened to allow mounting of the twelfth coil C12 on the last twelfth teeth part T12. When the cut section 50 is to be opened, this opening of the cut section 50 is performed in the elastically deformable range of the stator core 1. As long as the opening width is in the elastically deformable range of the stator core 1, the cut section 50 is not plastically deformed and the stator core 1 can return, by the elasticity, to its original shape having high circularity and high end-face parallelism.

Since the cut section 50 is formed only at one place, it is possible to directly mount the first coil C1 and others on the first teeth part T1 and others without opening the cut section 50 except for the case where the twelfth coil C12 is to be mounted on the twelfth teeth part T12. Accordingly, the cut section 50 has only to be opened only once in order to mount the twelfth coil C12 on the twelfth teeth part T12, so that the circularity and the end-face parallelism remain unchanged. Only one-time opening the cut section 50 makes it possible to enhance an assembling efficiency and reduce a manufacturing cost.

Opening the cut section 50 allows the twelfth coil C12 to be easily mounted on the twelfth teeth part T12. The reason thereof is as below. The stator core 1 is made of laminated or stacked steel plates and thus has low rigidity. This allows the cut section 50 to be easily opened by a few of millimeters in the elastically deformable range. Since the cut section 50 formed in the yoke part 12 beside the twelfth teeth part T12 is allowed to be easily opened, the gap corresponding to the mountable width J needed to mount the twelfth coil C12 can be generated.

In the case where the cut section 50 is opened by a few of three millimeters in the elastically deformable range, when the cut section 50 is to be allowed to return to its original shape, the cut section 50 will naturally return to the original shape by the elasticity of the yoke part 12. Accordingly, the cut section 50 can easily return to the original shape without needing application of a returning force thereto. This can reduce a manufacturing cost.

### (Second Embodiment)

A stator core 2 in a second embodiment is different from the stator core 1 in the first embodiment only in that a cut section 20 of the stator core 2 is different in shape from the cut section 50 of the stator core 1. The second embodiment is identical to the first embodiment except for the cut section and therefore will be explained with a focus on the cut section 20 without repeating the explanation of other parts or components.

The second embodiment in which other parts or components are not explained can also provide the same operations and advantageous effects as those in the first embodiment.

### (Modified Example of Shape of Cut Section in Radial Direction)

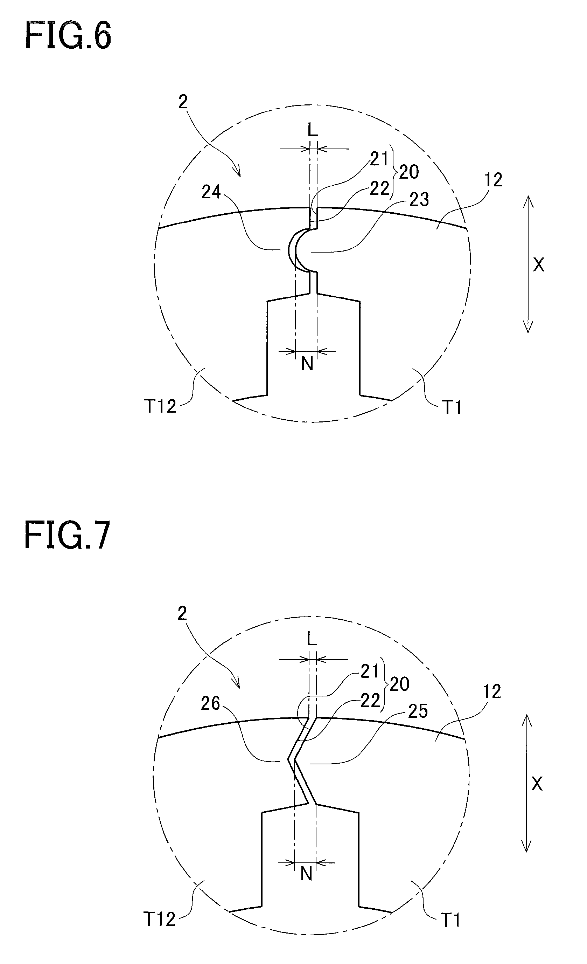

FIG. 6 is a partial enlarged view of a shape (1) of the cut section 20 of the stator core 2. As shown in FIG 6, the stator core 2 is formed with the cut section 20 extending in a radial direction. The cut section 20 is formed through all the thin steel plates. When a pull force is applied to the stator core 2, therefore, the cut section 20 is opened or separated. The cut section 20 includes one end 21 formed on the first teeth part T1 side of the yoke part 12 and the other end 22 formed on the twelfth teeth part T12 side of the yoke part 12. Opening the cut section 20 therefore means that the one end 21 and the other end 22 are separated from each other. While no force is applied to the cut section 20, the one end 21 and the other end 22 are in contact with each other.

The one end 21 may be formed with an engagement protrusion 23 having a curved surface at a distal end and the other end 22 may be formed with an engagement recess 24 having a curved surface engageable with the engagement protrusion 23. The protrusion 23 and the recess 24 are formed in a radial direction X.

The protrusion 23 has a length N longer than a width of the gap L by which the cut section 20 is allowed to open. A depth of the recess 24 engaging with the protrusion 23 is equal to the length N of the protrusion 23. For instance, if the width of the gap L is about 3 mm, the length N of the protrusion 23 and the depth of the recess 24 are respectively set to be 4 mm or more.

FIG 7 is a partial enlarged view of a shape (2) of the cut section 20 of the stator core 2. Furthermore, the shape of the cut section 20 is not limited to the shape having such a curved end as shown in FIG 6 and may be a shape having a triangular end as shown in FIG 7. Specifically, as shown in FIG 7, the cut section 20 may be formed with an engagement protrusion 25 having a triangular protruding shape and an engagement recess 26 having a triangular recessed shape engageable with the protrusion 25. These protrusion 25 and recess 26 are formed in a radial direction X.

The protrusion 25 has a length N longer than a width of the gap L by which the cut section 20 is allowed to open. A depth of the recess 26 engaging with the protrusion 25 is equal to the length N of the protrusion 25. For instance, if the width of the gap L is about 3 mm, the length of the protrusion 25 and the depth of the recess 26 are respectively set to be 4 mm or more.

### (Operations and Advantageous Effects of Shape of Cut Section in Radial Direction)

With the engagement protrusion 23 and the engagement recess 24 formed as shown in FIG 6, it is possible to restrain displacement of the stator core 2 shown in FIG 6 in the radial direction when the stator core 2 is elastically deformed. Since the displacement in the radial direction is restrained, the stator core 2 can return to its original shape having high circularity and high end-face parallelism.

The reason thereof is as below. While the cut section 20 having been opened is fully returning to its original shape by the elasticity, the protrusion 23 and the recess 24 serve as a guide for the returning motion. Owing to the protrusion 23 and the recess 24, the cut section 20 can return to its original position. Since the cut section 20 can return to the original position, the stator core 2 can return to a shape having high circularity and high end-face parallelism without being plastically deformed.

Furthermore, the length N of the engagement protrusion 23 and the engagement recess 24 is set to 4 mm or more, which is longer than the width of the gap L of about 3 mm for opening the cut section 20, so that the protrusion 23 does not disengage from the recess 24 during coil assembling. Accordingly, the protrusion 23 and the recess 24 can serve as a guide to prevent the stator core 2 from disassembling.

The stator core 2 having the protrusion 23 and the recess 24 in the radial direction X can be made by use of a single press die used for shaping a steel plate. Since the stator core 2 having the protrusion 23 and the recess 24 can be manufactured by use of the single press die, a manufacturing cost can be reduced than in the case where engagement portions are formed in a lamination direction. This is because, to manufacture the stator core having the engagement portions in the lamination direction, steel plates have to be made in at least two patterns.

In the case where the engagement protrusion 25 and the engagement recess 26 shown in FIG 7 are formed, they can provide the same effects as the engagement protrusion 23 and the engagement recess 24 having curved end faces shown in FIG 6.

Since the protrusion 23 and the recess 26 in FIG 7 can provide the same effects, their explanations are omitted.

### (Third Embodiment)

A stator core 3 in a third embodiment is different from the stator core 1 in the first embodiment only in that the shape of a cut section 30 of the stator core 3 is different from the shape of the cut section 50 of the stator core 1. The third embodiment is identical to the first embodiment except for the cut section and thus is explained with a focus on the cut section 30 without repeating the explanation of other parts or components.

The third embodiment in which other parts or components are not explained can also provide the same operations and advantageous effects as those in the first embodiment.

### (Modified Example of Shape of Cut Section in Lamination Direction)

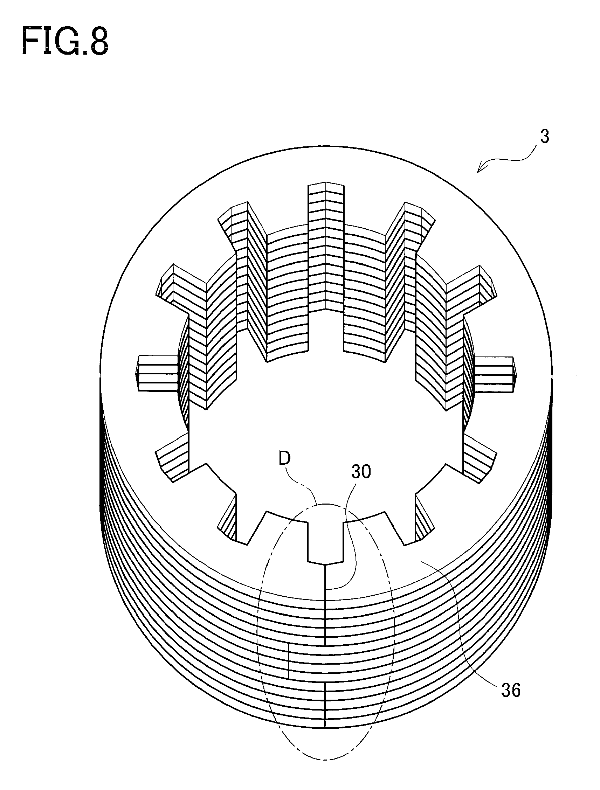

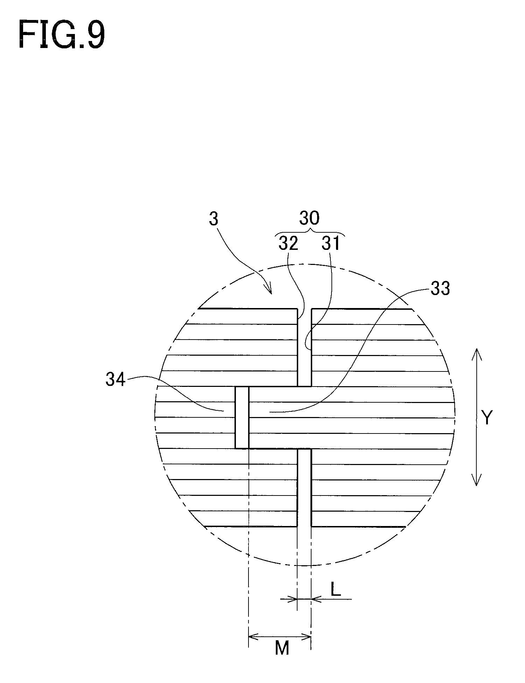

FIG 8 is an external perspective view of the stator core 3 in the third embodiment. FIG 9 is a partial enlarged view of a part of the stator core 3 enclosed by a dashed-chain line D in FIG 8.

The stator core 3 is formed with the cut section 30 extending in a radial direction as shown in FIG 8. The cut section 30 is formed through all the thin steel plates and thus is opened or separated when a pull force is applied to the stator core 3. The cut section 30 includes one end 31 formed on the first teeth part T1 side of the yoke part 12 and the other end 32 formed on the twelfth teeth part T12 side of the yoke part 12. Opening the cut section 30 therefore means that the one end 31 and the other end 32 are separated from each other. While no force is applied to the cut section 30, the one end 31 and the other end 32 are in contact with each other as shown in FIG 8.

As shown in FIG 9, the one end 31 may be formed with an engagement protrusion 33 and the other end 32 may be formed with an engagement recess 34 engageable with the protrusion 33. The protrusion 33 and the recess 34 are formed in a lamination direction Y

The protrusion 33 has a length M longer than a width of the gap L by which the cut section 30 is allowed to open. The recess 34 engaging with the protrusion 33 has a depth equal to the length M of the protrusion 33. For instance, in the case where the width of the gap L is about 3 mm, the length M of the protrusion 33 and the depth of the recess 34 are respectively set to be 4 mm or more.

### (Operations and Advantageous Effects of Shape of Cut Section in Lamination Direction)

Owing to the presence of the engagement protrusion 33 and the engagement recess 34 formed as shown in FIGs. 8 and 9, it is possible to restrain displacement of the stator core 3 in the lamination direction Y in FIG 9 when the stator core 3 is elastically deformed. Since the displacement in the lamination direction Y is prevented, the stator core 3 can return to its original shape with high circularity and high end-face parallelism.

The reason thereof is as below. The protrusion 33 and the recess 34 serve as a guide to fully return the opened cut section 30 to an original position. With those protrusion 33 and recess 34, the cut section 30 can return completely to the original position. Consequently, the stator core 3 can return to the shape having high circularity and high end-face parallelism without causing plastic deformation.

Since the length M of the engagement protrusion 33 and the engagement recess 34 is longer than the width of the gap L for opening the cut section 30 during coil assembling, the protrusion 33 does not disengage from the recess 34. Therefore, the protrusion 33 and the recess 34 can serve as a guide to prevent the stator core 3 from disassembling.

Furthermore, the thickness of the stator core 3 in the lamination direction is larger than the thickness in the radial direction, so that the protrusion 33 and the recess 34 can be formed in two or more places in the lamination direction. Specifically, the third embodiment includes the protrusion 33 and the recess 34 each at one place but may include a plurality of engagement protrusions and a plurality of engagement recesses. In the case of including the engagement protrusions and the engagement recesses, the cut section 30 can fully return to the original position more reliably.

### (Fourth Embodiment)

A stator core 4 in a fourth embodiment is different from the stator core 1 in the first embodiment only in that the stator core 4 is formed with a one-end protrusion 41 and an other-end protrusion 42 each protruding outward from the yoke part 12. Thus, the fourth embodiment is explained with a focus on a cut section 70 without repeating explanation of other parts or components.

The fourth embodiment in which explanations of other parts or components are omitted can provide the same operations and advantageous effects as those in the first embodiment.

### (Configuration of One-end Protrusion and Other-end Protrusion)

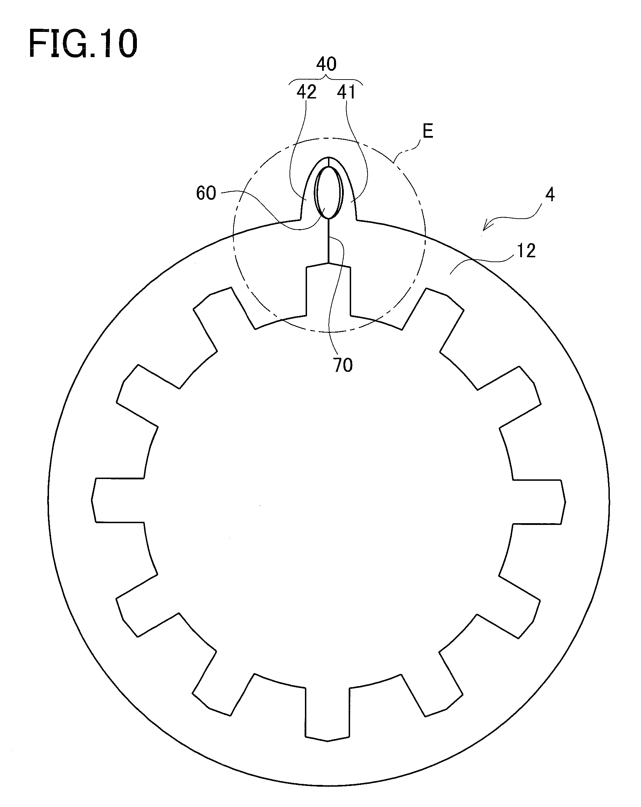

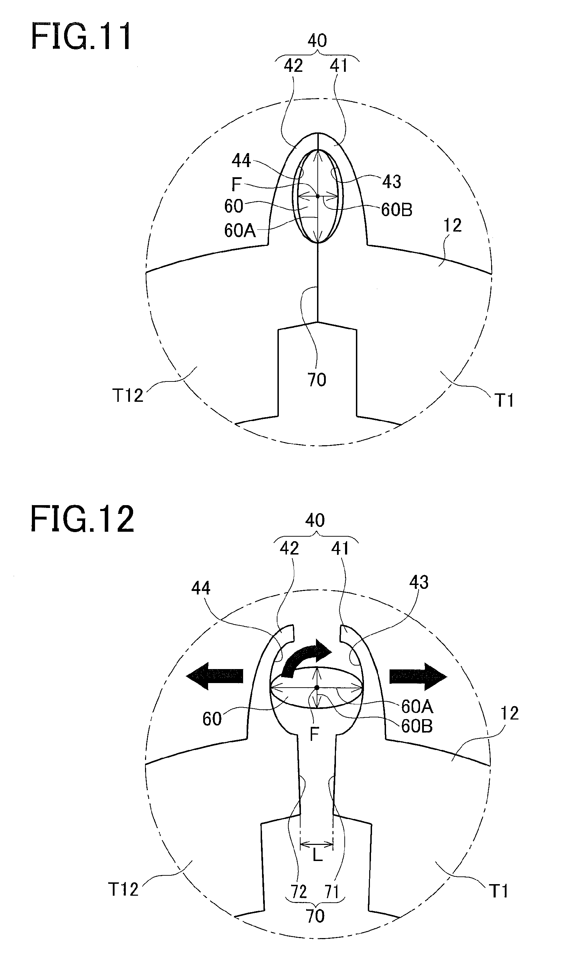

FIG 10 is a front view of the stator core 4 in the fourth embodiment. FIG 11 is a partial enlarged view (1) of a part enclosed by a chain line E in FIG 10 in the fourth embodiment. FIG 12 is a partial enlarged view (2) of the part enclosed by the chain line E in FIG 10 in the fourth embodiment.

As shown in FIG 12, the one-end protrusion 41 and the other-end protrusion 42 are formed each protruding outward from the outer periphery of the yoke part 12. The one-end protrusion 41 is formed on a side of one end 71 of both end portions of the cut section 70, while the other-end protrusion 42 is formed on a side of the other end 72 of both end portions of the cut section 70. As shown in FIG 10, the one-end protrusion 41 and the other-end protrusion 42 constitute an outward protruding portion 40.

A one-end gap forming recess 43 of a semielliptic shape is formed in a contact surface of the one-end protrusion 41 that contacts with the other-end protrusion 42. An other-end gap forming recess 44 of a semielliptic shape is formed in a contact surface of the other-end protrusion 42 that contacts with the one-end protrusion 41. When the recesses 43 and 44 are placed in contact relation, they form a through hole of a hollow elliptic cylindrical shape.

In the present embodiment, the recesses are provided as through holes, but may be formed in a concave or recessed shape, not a through hole shape.

### (Operations and Advantageous Effects of One-end Protrusion and Other-end Protrusion)

The one-end protrusion 41 and the other-end protrusion 42 are used in the second step to open the cut section 70 from a closed position shown in FIG 11 to generate a gap L as shown in FIG 12. The gap L in the fourth embodiment is about 3 mm.

The stator core 4 in the fourth embodiment is formed with the one-end gap forming recess 43 of a semielliptic shape in the contact surface of the one-end protrusion 41 that contacts with the other-end protrusion 42 and the other-end gap forming recess 44 of a semielliptic shape in the contact surface of the other-end protrusion 42 that contacts with the one-end protrusion 41.

As shown in FIGs. 10 and 11, an elliptic cylindrical tool 60 is inserted in the hollow elliptic cylindrical though hole defined by the recesses 43 and 44. The tool 60 has a size smaller than the elliptic cylindrical through hole and thus can be inserted in the through hole.

As shown in FIG 12, the tool 60 is inserted in the through hole and then rotated 90° about a center point F. By this 90°-rotation of the tool 60, the one-end protrusion 41 and the other-end protrusion 42 are separated from each other by a distance corresponding to a value obtained by subtracting a minor axis 60B from a major axis 60A of the elliptic shape. Accordingly, the simple 90°-rotation of the elliptic cylindrical tool 60 makes it easy to open the cut section 70.

Furthermore, by the 90°-rotation of the elliptic cylindrical tool 60, the one-end protrusion 41 and the other-end protrusion 42 can be separated accurately by the distance corresponding to the value obtained by subtracting the minor axis 60B from the major axis 60A of the elliptic shape.

Accordingly, by use of the tool 60, it is possible to accurately apply a force to the stator core 4 in an elastically deformable range. The tool 60 can therefore be returned to its original position without causing plastic deformation of the stator core 4. Thus, the stator core 4 can maintain the circularity and the end-face parallelism at the same level as before the use of the tool 60.

By using the tool 60, the one-end protrusion 41 and the other-end protrusion 42 are moved apart from each other. The cut section 70 can therefore be easily opened.

Furthermore, since the cut section 70 is formed with the one-end protrusion 41 and the other-end protrusion 42, the cut section 70 can be opened while keeping the circularity and the end-face parallelism of the stator core 4.

The reason thereof is as below. The one-end protrusion 41 and the other-end protrusion 42 are formed on the outer periphery of the yoke part 12 needing to maintain the circularity and end-face parallelism. Therefore, the cut section 70 can be opened while keeping the circularity and the end-face parallelism of the yoke part 12 more reliably in the case where the one-end protrusion 41 and the other-end protrusion 42 formed on the outer periphery of the yoke part 12 are separated than in the case where the yoke part 12 needing to maintain the circularity and end-face parallelism is directly opened.

When a force is directly applied to the yoke part 12, the yoke part 12 may be deformed, resulting in that the circularity and end-face parallelism cannot be maintained. However, when a force is directly applied to the one-end protrusion 41 and the other-end protrusion 42 formed on the outer periphery of the yoke part 12, the yoke part 12 needing to maintain the circularity and the end-face parallelism is not deformed. Thus, the circularity and the end-face parallelism can be kept.

Furthermore, separating the one-end protrusion 41 and the other-end protrusion 42 formed on the outer periphery of the yoke part 12 is easier than directly separating the yoke part 12 by application of a force thereto.

This is because the outward protruding portion 40 formed distantly from the stator core 4 needs only a small force to open the cut section 70. Accordingly, opening the outward protruding portion 40 can easily open the cut section 70 formed in the yoke part 12. This can enhance the assembling efficiency to mount the twelfth coil C12 on the last twelfth teeth part T12 and also reduce the manufacturing cost.

The present invention is not limited to the above embodiments and may be embodied in other specific forms without departing from the essential characteristics thereof.

For instance, it may combine the engagement protrusion and the engagement recess in the radial direction in the second embodiment with the engagement protrusion and the engagement recess in the lamination direction in the third embodiment. This combination of both configurations allows the cut section to fully return to the original position more reliably when returning by the elasticity.

For instance, the stator cores in the first to fourth embodiments may be configured in combination. The combined configurations can also provide operations and advantageous effects obtainable from respective features.

For instance, the pilot hole 92C shown in FIG 21 may be formed in a long rectangular slit shape. Because of the long rectangular hole shape, a required steel plate area can be reduced. Since the width of a pilot hole having such a long hole shape can be set narrow, the area of a pre-shaped steel plate can be made close to the size of the stator-core steel plate 80 which is a finished product. Thus, pre-shaped steel plate can be designed smaller. This reduced size results in savings in material cost and reduction in total cost.

In the above embodiments, for instance, the plurality of cutting punches 75 are provided. As an alternative, if the cutting punch 75 is moved, the cut section can be formed according to the rotary lamination angle of the stator-core steel plates and the cut section can be formed shifted by a predetermined amount in a circumferential direction. By moving the cutting punch 75, the stator-core steel plates 80 formed with the cut sections can be produced at low cost.

### REFERENCE SIGNS LIST

- 1: Stator core
- C: Coil
- C1 to C 12: First coil to Twelfth coil
- T: Teeth part
- T1 to T12: First teeth part to Twelfth teeth part
- 12: Yoke part
- 50: Cut section
- 51: One end of cut section
- 52: The other end of cut section
- 80: Stator-core steel plate
- 801: Outer periphery
- 81: Steel-plate yoke part
- Z: Teeth part
- 90: Cut section
- 92: Second pre-shaped steel plate
- 92A: Inner diameter hole
- 92C: Pilot hole
- 93: Third pre-shaped steel plate
- 931: The other end
- 932: One end

## Claims

1. A method for manufacturing a stator core, in which core steel plates each having a yoke part and teeth parts are sequentially formed and the core steel plates are laminated one on another to produce the stator core, the method including:
forming a cut section extending in a radial direction in each of the core steel plates in the progressive press process so that the cut section is located at only one place in a circumferential direction.

2. The method for manufacturing a stator core according to claim 1, wherein
the stator core is made of the core steel plates stacked by rotary lamination, and
a cut position of each cut section to be formed is changed according to an angle of rotary lamination of the core steel plates.

3. The method for manufacturing a stator core according to claim 1, wherein the cut position of the cut section is changed by a predetermined amount in the circumferential direction.

4. The method for manufacturing a stator core according to claim 2 or 3, wherein
a plurality of cutting punches are provided to form the cut sections, and
the cutting punches are able to be switched between operation and non-operation.

5. The method for manufacturing a stator core according to claim 2 or 3, wherein the cutting punch is moved.

6. The method for manufacturing a stator core according to one of claims 1 to 5, further including:
an inner diameter hole forming step of forming the teeth parts and an inner diameter hole in a pre-shaped steel plate and in an inner circumference of each core steel plate;
a pilot hole forming step of forming a pilot hole at one place of the pre-shaped steel plate in an outer peripheral portion outside a portion of the pre-shaped steel plate to be punched out as the core steel plate;
a cut section forming step of forming the cut section to extend from the inner diameter hole to the pilot hole; and
a steel plate punching step of punching out the core steel plate from the pre-shaped steel plate.

7. The method for manufacturing a stator core according to claim 6, wherein the pilot hole has a long hole shape.

8. A stator core manufacturing apparatus for manufacturing a stator core made of core steel plates each including a yoke part and teeth parts, the core steel plates being sequentially formed by a progressive press process and laminated one on another,
wherein the apparatus includes a cutting punch to form a cut section extending in a radial direction in each of the core steel plates in the progressive press process so that the cut section is located at only one place in a circumferential direction.

9. The stator core manufacturing apparatus according to claim 8, wherein
the stator core is made of the core steel plates stacked by rotary lamination, and
a cut position of each cut section to be formed is changed according to an angle of rotary lamination of the core steel plates.

10. The stator core manufacturing apparatus according to claim 8, wherein the cutting punch is moved in the circumferential direction to the cut position.

11. The stator core manufacturing apparatus according to claim 9 or 10, wherein
a plurality of cutting punches are provided, and
the cutting punches are able to be switched between operation and non-operation.

12. The stator core manufacturing apparatus according to one of claims 8 to 11, the apparatus including:
an inner diameter hole forming unit to form the teeth parts and an inner diameter hole in a pre-shaped steel plate and in an inner circumference of each core steel plate;
a pilot hole forming unit to form a pilot hole at one place of the pre-shaped steel plate in an outer peripheral portion outside a portion of the pre-shaped steel plate to be punched out as the core steel plate; and
a steel plate punching unit to punch out the core steel plate from the pre-shaped steel plate.

13. The stator core manufacturing apparatus according to claim 12, wherein the pilot hole forming unit is arranged to form the pilot hole having a long hole shape.
